# EUROPEAN PATENT APPLICATION

(11) **EP 4 040 047 A1**
(43) Date of publication of application: **10.08.2022**
(21) Application number: 20851367.1
(22) Date of filing: 21.02.2020
(51) Int. Cl.: F24C 7/04, F24C 15/00, H05B 6/12

(54) **THERMAL COOKER**

(30) Priority: 01.10.2019 JP 2019181578
(71) Applicant: Panasonic Intellectual Property Management Co., Ltd., Osaka-shi, Osaka 540-6207 (JP)
(72) Inventor: HAYASHI, Masahiro, Osaka-shi, Osaka 540-6207 (JP); TAKAHASHI, Tomoya, Osaka-shi, Osaka 540-6207 (JP)
(74) Representative: SSM Sandmair
(86) International application number: PCT/JP2020/007112
(87) International publication number: WO 2021/065030

(57) **Abstract**

A heating cooker (1) includes a top plate (5a) on which a container that accommodates an object to be heated is placed, a heater (7) that heats the container placed on the top plate (5a) from below, and a projector (41) that is at least partly disposed below the top plate (5a) and that projects an image diagonally upward.

## Description

### TECHNICAL FIELD

The present disclosure relates to a heating cooker and more specifically to a heating cooker that displays image contents.

### BACKGROUND ART

Some conventional heating cookers have a display that displays their operating state on a top plate. Disposed on this top plate are a heating area in which a pot is to be heated and an operation unit through which heating power is adjusted. Because of this configuration, the display has a restricted size. Thus, such displays have difficulty displaying large amounts of information. With regard to this, Patent Document 1 discloses a heating cooker that includes a liquid crystal monitor separately from its main body.

For example, the heating cooker in Patent Document 1 displays the same information on both the separate liquid crystal monitor and a liquid crystal monitor disposed on the top plate. This separate liquid crystal monitor also receives a TV broadcast and thus can display a TV program and cooking information for the heating cooker at the same time.

### PRIOR ART DOCUMENTS

### PATENT DOCUMENTS

Patent Document 1: Japanese Unexamined Patent Publication No. 2008-305704

### SUMMARY OF THE INVENTION

### PROBLEMS TO BE SOLVED BY THE INVENTION

The arrangement of a heating cooker and a liquid crystal monitor, however, may disadvantageously make their installation complicated.

An object of the present disclosure, which addresses the above disadvantage, is to provide a heating cooker that can display image contents but is easy to install.

### MEANS FOR SOLVING THE PROBLEMS

To accomplish the above object, a heating cooker according to an aspect of the present disclosure includes: a top plate on which a container that accommodates an object to be heated is placed; a heater that heats the container placed on the top plate from below; and a projector that is at least partly disposed below the top plate and that projects an image diagonally upward.

### EFFECTS OF THE INVENTION

It is possible to provide a heating cooker that can display image contents but is easy to install.

### BRIEF DESCRIPTION OF THE DRAWINGS

FIG. 1 is a perspective view of a heating cooker according to a first embodiment.
FIG. 2 is a structural explanatory view of the heating cooker according to the first embodiment.
FIG. 3 is a top view of the heating cooker according to the first embodiment.
FIG. 4 is a block diagram illustrating a control system in the heating cooker according to the first embodiment.
FIG. 5 is a perspective view of a heating cooker according to a second embodiment.
FIG. 6 is a block diagram illustrating a control system in the heating cooker according to the second embodiment.
FIG. 7 is a block diagram illustrating a control system in a heating cooker according to a third embodiment.
FIG. 8 is a flowchart of processing procedures for projecting an image content of a cooking menu downloaded from a server.
FIG. 9 is a block diagram illustrating a control system in a heating cooker according to a fourth embodiment.
FIG. 10 is a flowchart of processing procedures for projecting an image captured by an imaging device.
FIG. 11 is a block diagram illustrating a control system in a heating cooker according to a fifth embodiment.
FIG. 12 is a flowchart of image processing procedures in a heating cooker intercommunicating with an external terminal.
FIG. 13 is a perspective view of a heating cooker according to a modification.
FIG. 14 is a structural explanatory view of the heating cooker according to a modification.

### MODES FOR CARRYING OUT THE INVENTION

According to an aspect of the present disclosure, a heating cooker includes: a top plate on which a container that accommodates an object to be heated is placed; a heater that heats the container placed on the top plate from below; and a projector that is at least partly disposed below the top plate and that projects an image diagonally upward.

The projector may have a zoom lens.

The top plate may have an opening. The heating cooker may further include a cover that covers the opening in an openable and closable manner.

The heating cooker may further include a projection direction changing unit capable of moving an image projected from the projector in a horizontal direction.

The top plate may have an opening. The projection direction changing unit may include: a cover that covers the opening in an openable and closable manner and that has a reflective surface; and a cover driver that drives and rotates the cover biaxially. The projector may make the image reflect on the reflective surface of the cover to project the image.

The projection direction changing unit may change a projection direction of the image in accordance with a cooking status.

The heating cooker may further include: a temperature sensor that detects a temperature of the container; and a cooking status determination unit that determines the cooking status, based on the temperature detected by the temperature sensor. The projection direction changing unit may change the projection direction of the image, based on a determination result of the cooking status determination unit.

The heating cooker may further include a human detection sensor that detects presence of a user. The projection direction changing unit may change the projection direction of the image, depending on a user position.

The projection direction changing unit may change a projection direction of the image, depending on a kind of an image content.

The heating cooker may further include an instruction receiver that receives a user's instruction. The projection direction changing unit may change a projection direction, based on the user's instruction.

The heating cooker may further include an image controller that controls selection and playback of an image content to be projected. The image controller may change display of the image content, in accordance with the cooking status.

The heating cooker may further include a main body communication unit wirelessly connected to a mobile terminal. The main body communication unit may receive an image captured by a camera to which the mobile terminal is wirelessly connected. The projector may project the captured image.

The heating cooker may further include a main body communication unit wirelessly connected to a mobile terminal. The main body communication unit may receive an image captured by a camera that an external terminal connected to the mobile terminal over the Internet has. The projector may project the captured image.

The heating cooker may further include a screen on which an image emitted from the projector is projected.

### (First embodiment)

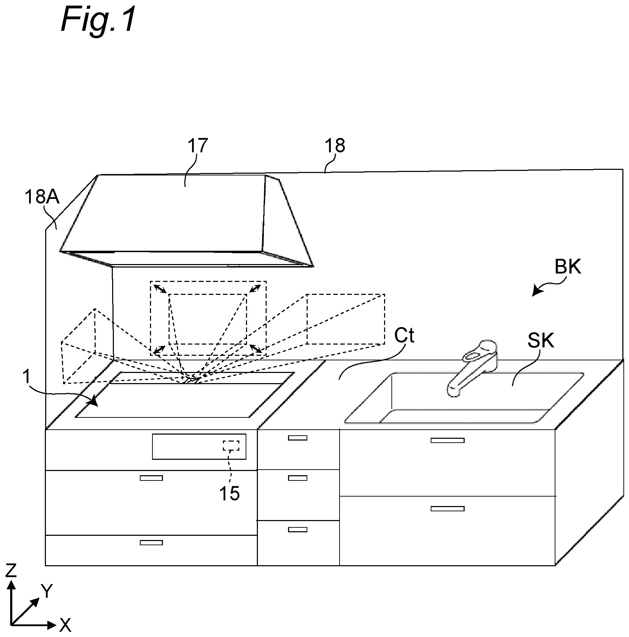

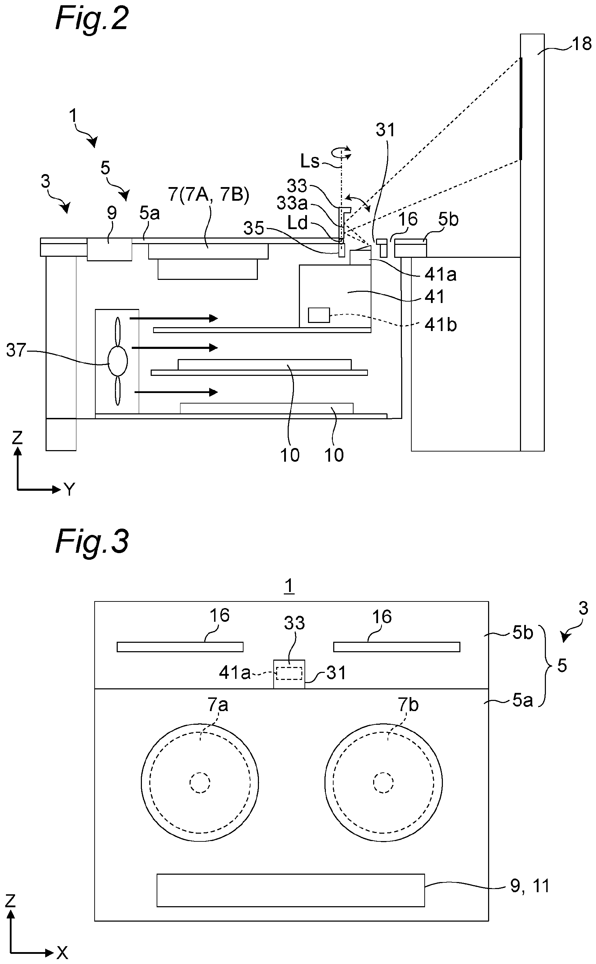

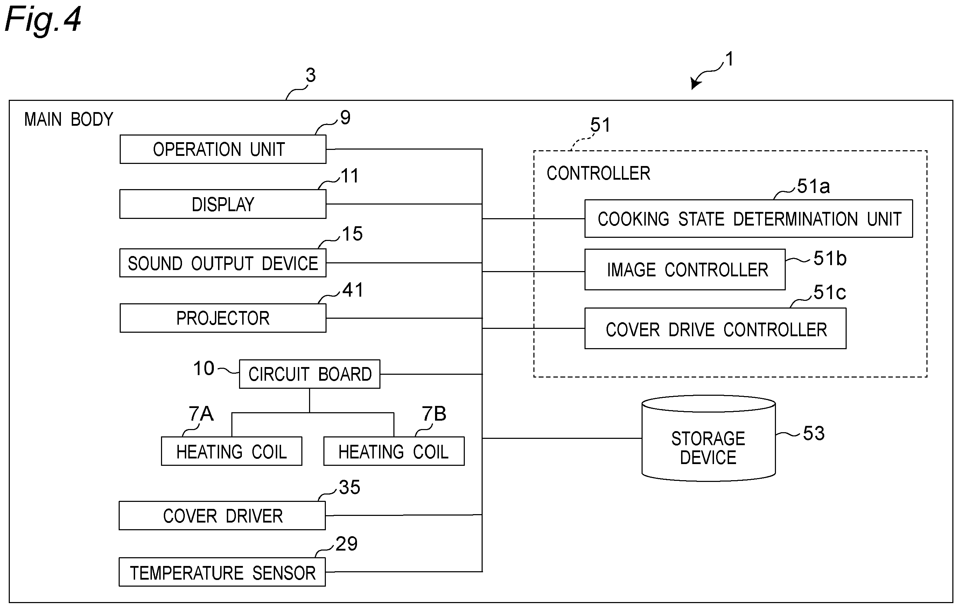

With reference to FIGS. 1 to 4, a description will be given below of a heating cooker according to a first embodiment of the present disclosure. FIG. 1 is a perspective view of a heating cooker 1 according to the first embodiment of the present disclosure. FIG. 2 is a structural explanatory view of the heating cooker 1 according to the first embodiment. FIG. 3 is a top view of the heating cooker 1 according to the first embodiment. FIG. 4 is a block diagram illustrating a control system in the heating cooker 1. In the drawings, an X-axial direction indicates a width direction of the heating cooker, a Y-axial direction indicates a front-rear direction of the heating cooker, and a Z-axial direction indicates a height direction of the heating cooker. A positive direction of an X-axis is defined as a right direction, whereas a negative direction of the X-axis is defined as a left direction.

As illustrated in FIG. 1, the heating cooker 1 is installed, for example, in a system kitchen BK. The system kitchen BK includes the heating cooker 1, a countertop Ct, a sink SK, and a range hood 17, for example. Disposed behind the heating cooker 1, the countertop Ct, and the sink SK is a wall surface 18. The range hood 17 is attached to the wall surface 18 so as to be positioned above the heating cooker 1. The range hood 17 sucks air above the heating cooker 1 with a built-in fan and then exhausts the air through a discharge port communicating with the outside. Disposed on a left side of the heating cooker 1 as viewed from its front is a wall surface 18A. The system kitchen BK is installed, for example, on an L-shaped corner formed by wall surfaces 18 and 18A.

As illustrated in FIGS. 2 and 3, the heating cooker 1 includes: a main body 3; and a top unit 5 that forms an upper portion of the main body 3. The top unit 5 includes: a top plate 5a on which a container for use in cooking is placed; and a back frame 5b disposed on a back side (Y-directional side) of the top plate 5a. The back frame 5b is provided with exhaust ports 16. The container accommodates an object to be cooked.

In the case of the first embodiment, the heating cooker 1 may be an induction heating cooker. The heating cooker 1 includes a heater 7 and circuit boards 10 below a container placement area on the top plate 5a and inside the main body 3. The heater 7 includes heating coils 7A and 7B. Each of the heating coils 7A and 7B generates an induced magnetic field in order to heat containers. The circuit boards 10 supply high-frequency currents to the heating coils 7A and 7B and control the amounts of the currents flowing through the heating coils 7A and 7B.

The main body 3 includes an operation unit 9 through which the user operates the heater 7. The operation unit 9 is disposed on a front side of the top plate 5a in the heating cooker 1. For example, the operation unit 9 may be a touch key, a touch panel, a dial, a button, or a lever. In response to an operational instruction through the operation unit 9, the circuit boards 10 control the start, stop, and thermal power levels of heating of the heating coils 7A and 7B.

The main body 3 includes; a display 11 that displays information, such as the thermal power levels, of the heater 7 in the form of text or an image; and a sound output device 15 that provides notification of information regarding heating of the heater 7 with sound. The display 11 is disposed in a front portion of the top plate 5a in the heating cooker 1. For example, the display 11 is a monochrome liquid crystal panel having a band shape extending in a longitudinal direction of the top plate 5a; however, it may be a color liquid crystal panel. In the first embodiment, the display 11 and the operation unit 9 are integrated with each other as a single touch panel.

The heating cooker 1 is provided with the sound output device 15 on the front side which outputs voice guidance to a user. For example, the sound output device 15 may be a speaker.

The back frame 5b is provided with a through-hole 31 at its center in the longitudinal direction. The through-hole 31 is covered with a cover 33 that is biaxially rotatable in an openable and closable manner. The cover 33 is rotationally driven around both a first rotation axis Ld and a second rotation axis Ls by a cover driver 35; the first rotation axis Ld extends in the longitudinal direction (X direction), whereas the second rotation axis Ls extends in a vertical direction (Z direction). The first rotation axis Ld is positioned in a front portion of the cover 33. With this, the cover 33 that has been closed is rotationally driven from the back side to the front side so as to stand up, which suppresses light of the projector 41, described later, from entering user's eyes directly. In addition, it hinders cooking stains from adhering to the projector 41. The cover driver 35 includes a biaxial rotation mechanism and a stepping motor, for example. The cover 33 has an inner surface 33a that has been mirror-finished.

The heating cooker 1 includes the projector 41 inside the main body 3. The projector 41 is disposed below both the top plate 5a and the cover 33. The projector 41 emits an image toward the inner surface 33a of the cover 33 through a projection lens 41a. The emitted image is reflected by the inner surface 33a of the cover 33 and projected onto the wall surface 18 between the range hood 17 and the heating cooker 1. For example, the projection lens 41a may be a zoom lens. The projector 41 has a zoom adjustment mechanism (not illustrated) for the projection lens 41a. This zoom adjustment mechanism may adjust a projection magnification of the projection lens 41a in response to an operation through the operation unit 9.

The heating cooker 1 includes a fan 37 inside the main body 3. The fan 37 generates wind, which cools the circuit boards 10 and a light source 41b in the projector 41. For example, the light source 41b may be a light-emitting diode (LED) or a laser diode. After having cooled the circuit boards 10 and the projector 41, the wind flows out from the heating cooker 1 through the exhaust ports 16.

The heating cooker 1 includes a controller 51 and a storage device 53. The storage device 53 stores image contents and sound information in relation to cooking programs.

The controller 51 can be implemented by a semiconductor element, for example. The controller 51 may be a processor that includes a microcomputer, a central processing unit (CPU), a microprocessor, a digital signal processor (DSP), a field-programmable grid array (FPGA), and an application-specific integrated circuit (ASIC), for example. The controller 51 may be composed of hardware alone or may be implemented in a combination of hardware and software. The controller 51 is configured to perform various functions by reading and executing data and programs stored in the storage device 53, such as read-only memory (ROM), random-access memory (RAM), a hard disk, and a solid-state disk (SSD).

The controller 51 includes a cooking status determination unit 51a, an image controller 51b, and a cover drive controller 51c.

The cooking status determination unit 51a determines a cooking status on the top plate 5a and controls progress of a cooking program in accordance with the cooking status. The cooking program includes individual cooking steps required to cook a dish; each of the cooking steps contains cooking information, such as a cooking content, a heating amount, and a heating time. A plurality of types of cooking programs are stored in the storage device 53. For example, the cooking status may be a cooking step currently being executed. The heating amount may be at least one of thermal power and a heating temperature.

For example, a cooking program for a "hamburger" includes: a preheating step of preheating a frying pan; a step of baking the front; an inside-out step, a step of baking the rear; and a finishing step. Each cooking step contains preset cooking information, such as a heating time and a heating amount. The cooking program is not limited to cooking steps using the heating cooker 1 and may include preparation steps, for example. For example, the cooking program for a "hamburger" may include steps of cutting ingredients and kneading meat for the hamburger.

In relation to cooking programs as described above, image contents are stored in the storage device 53. For example, for the step of baking the front, an image of a hamburger having a sampled baked color is stored. For the kneading step, an image of an unbaked hamburger is stored.

When the user selects any given cooking menu through the operation unit 9, the cooking status determination unit 51a reads a corresponding cooking program from the storage device 53, based on an input signal through the operation unit 9. In addition, the cover drive controller 51c drives and controls the cover driver 35, based on the input signal through the operation unit 9, thereby rotating the cover 33 so as to enter an upright state.

The cooking status determination unit 51a determines the progress of the cooking step, for example, based on the read cooking program and the output of the circuit boards 10. The information on the cooking step is transmitted to the image controller 51b. Then, the image controller 51b selects an image content related to the cooking step and reads this image content from the storage device 53. After that, the image controller 51b transmits the image content to the projector 41. In this way, the image controller 51b controls the selection and playback of an image content and changes the display of the image content in accordance with the cooking status.

The projector 41 makes an image of the read image content reflect on the cover 33, thereby projecting this image onto the wall surface 18. Then, the cover drive controller 51c rotates the cover 33 around the second rotation axis Ls extending in a direction perpendicular to the top plate 5a, depending on the image content. If the kind of the image content is an image of the "preparation", for example, each image content contains information regarding an image direction in advance. In accordance with this information, the cover drive controller 51c controls the cover driver 35 in such a way that the cover 33 faces the wall surface 18 on the countertop Ct side. In this way, the image of the "preparation" is moved to the countertop Ct side, thereby enabling the user standing in front of the countertop Ct to easily view this image. For example, the kind of the content may be the kind of an image content related to each cooking step. In addition, during the cooking step in which the user cannot clearly view the wall surface 18 of the heating cooker 1 due to steam from the container, for example, after the user has removed a lid, the cover drive controller 51c controls the cover driver 35 in such a way that the cover 33 rotates to face the wall surface 18A on a lateral side of the heating cooker 1. For example, information regarding the image direction is stored in advance in the storage device 53 for each cooking step. Thus, when the cooking status determination unit 51a detects the removal of the lid, the cover drive controller 51c controls a drive amount of the cover driver 35, based on the detection result and the information regarding the image direction stored in the storage device 53. In this way, the projector 41 can project the image content onto the wall surface 18A on a lateral side of the heating cooker 1. The direction in which the projector 41 projects the image content may be automatically set by the image controller 51b or may be set by the user through the operation unit 9. In accordance with the rotation drive amount on which the cover drive controller 51c instructs the cover driver 35, the image controller 51b adjusts the projected image content in order to modify the projected image that has been changed by the rotation of the cover 33. The cover 33 may be employed as a projection direction changing unit that varies a projection direction of an image projected by the projector 41. Alternatively, the projection direction changing unit may be constituted by the cover 33 and the cover driver 35 or by the cover 33, the cover driver 35, and the cover drive controller 51c.

When the cooking status determination unit 51a determines that all the cooking steps have been completed, the cooking status determination unit 51a powers off the projector 41. Furthermore, the cover drive controller 51c controls the cover driver 35 in such a way that the cover 33 is closed. In this way, the projector 41 terminates the projecting of the image content.

As described above, the heating cooker 1 in the first embodiment includes: the top plate 5a on which a container that accommodates an object to be heated is placed; the heater 7 that heats the container placed on the top plate 5a from below; and the projector 41 that is disposed below the top plate 5a and that projects an image diagonally upward. Since the projector 41 is accommodated in the heating cooker 1 below the top plate 5a, it is possible to provide a heating cooker that can display image contents but is easy to install. Moreover, using the projector 41 to display an image content suppresses space around the heating cooker 1 from being reduced even if a projection size of an image content is increased. This saves the space but nevertheless enables a user to easily view image contents.

### (Second embodiment)

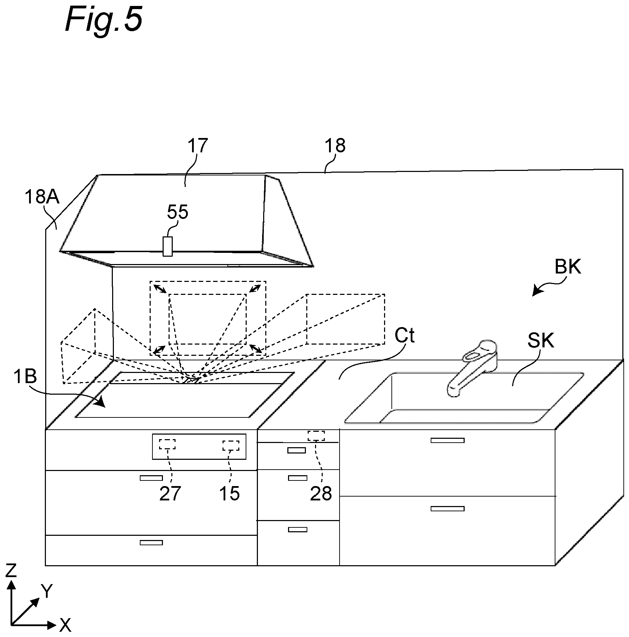

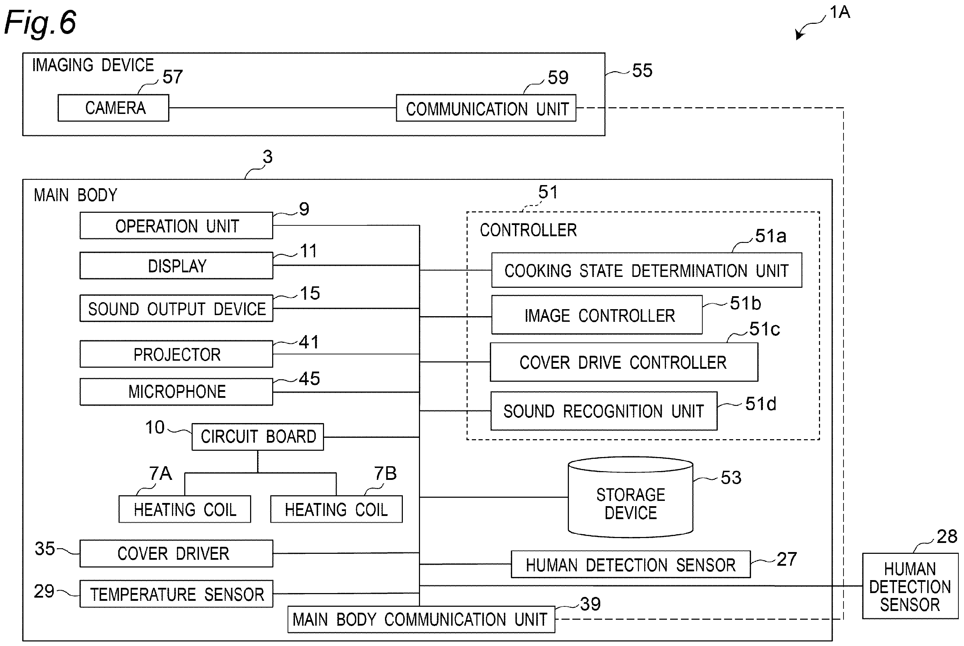

Next, a heating cooker 1A according to a second embodiment will be described with reference to FIGS. 5 and 6. The heating cooker 1A according to the second embodiment includes various types of sensors and changes a projection direction of an image, depending on the detection results of the individual sensors. The heating cooker 1A in the second embodiment has the same configuration as in the heating cooker 1 in the first embodiment, except for the items described below.

The heating cooker 1A in the second embodiment includes: human detection sensors 27 and 28 that detect a user position; a temperature sensor 29 that detects a temperature of a container or an object to be cooked in the container; a main body communication unit 39 that conducts wireless communication; a microphone 45; and an imaging unit 55. A controller 51 in the second embodiment includes a sound recognition unit 51d.

The human detection sensors 27 and 28, each of which may be a proximity sensor, for example, detect the presence of a user (person) within a short distance from the human detection sensors 27 and 28. The human detection sensor 27 is disposed on a front side of a main body 3. The human detection sensor 28 is disposed on a front side of a countertop Ct, for example. With the human detection sensors 27 and 28, it is possible to detect a user present in front of a heating cooker 1A and a user present in front of the countertop Ct. The human detection sensors 27 and 28 transmit detection signals to the controller 51. In this case, the human detection sensors 27 and 28 consume relatively large amounts of energy. When a human detection sensor is disposed in the main body 3 like the human detection sensor 27, the heating cooker 1A can supply energy from a power source, thus allowing the human detection sensor to operate stably.

When receiving a detection signal from the human detection sensor 27 which indicates the presence of the user, a cover drive controller 51c controls a cover driver 35 in such a way that an image is projected onto a wall surface 18 behind the heating cooker 1A. When receiving a detection signal from the human detection sensor 28 which indicates the presence of the user, the cover drive controller 51c controls the cover driver 35 in such a way that an image is projected onto the wall surface 18 behind the countertop Ct. In this way, the cover drive controller 51c controls a rotation drive amount of a cover 33 depending on the user position, thereby changing the projection direction of the image.

The temperature sensor 29 is disposed in a middle between heating coils 7A and 7B below a top plate 5a, for example, in order to detect a temperature at a bottom of a container. The temperature sensor 29 transmits its detected temperature to the controller 51. In this case, an infrared sensor may be attached to a range hood 17 as the temperature sensor 29 and may detect temperatures of the container and a cooked food in the container.

The imaging unit 55 includes: a camera 57; and a communication unit 59 that transmits/receives data to or from the main body communication unit 39 in the main body 3 through wireless communication. The imaging unit 55 is disposed on the range hood 17, for example, thus allowing the camera 57 to capture images of the top plate 5a and surrounding areas of the top plate 5a.

For example, the camera 57 may be a visible light camera or a thermal image camera. The camera 57 transmits captured image information to the controller 51 through the communication unit 59 and the main body communication unit 39 in the main body 3.

When the human detection sensor 27 detects a user present in front of the heating cooker 1A, the cover drive controller 51c projects an image content onto the wall surface 18 behind the heating cooker 1A. When the human detection sensor 28 detects a user present in front of the countertop Ct, the cover drive controller 51c controls a drive amount of the cover driver 35, thereby changing the projection position in such a way that an image content is projected onto the wall surface 18 behind the countertop Ct. In this way, the cover drive controller 51c changes the projection direction of the image, depending on the user position based on detection results of human detection sensors.

When a cooking status determination unit 51a determines that a cooking status has changed, based on a temperature detected by the temperature sensor 29, an image controller 51b projects an image content for a next cooking program, based on the determination result. If the next image content contains cooking with a lid removed from a container, for example, a user may fail to clearly view the image content due to steam. Thus, the cooking status determination unit 51a instructs the cover drive controller 51c to change the projection position in accordance with the progress of the cooking program. In response to the instruction from the cooking status determination unit 51a, the cover drive controller 51c controls a drive amount of the cover driver 35 in such a way that the cover 33 rotates. In this way, the cover drive controller 51c changes a projection direction of an image in accordance with the cooking status.

In response to a user's instruction through an operation unit 9, which acts as an instruction receiver, the cover drive controller 51c controls the drive amount of the cover driver 35 in accordance with the operation amount received through the operation unit 9 in such a way that the projection direction changes. Alternatively, the cover drive controller 51c may change the projection direction in response to a user's voice instruction. For example, the microphone 45, which acts as an instruction receiver, may collect a user's voice and transmit the collected sound information to the sound recognition unit 51d. Then, the sound recognition unit 51d may recognize a user's instruction from the sound information and transmit the recognized user's instruction to the cover drive controller 51c. In this way, the cover drive controller 51c may control the drive amount of the cover driver 35 based on the user's instruction in such a way that the projection direction changes.

The heating cooker 1A in the second embodiment changes the projection direction, depending on the detection results of various types of sensors. The heating cooker 1A may include all or one of the human detection sensors 27 and 28, the temperature sensor 29, the microphone 45, and the imaging unit 55. In addition to those sensors, for example, the heating cooker 1A may include a boil over sensor. When the boil over sensor detects that water is boiling over a container, the image controller 51b controls the projector 41 in such a way that it temporarily stops projecting an image content. Alternatively, the cover drive controller 51c may change the projection direction, depending on the image information captured by the camera 57. For example, the cooking status determination unit 51a may detect steam from the image information captured by the camera 57 and change the projection direction. Alternatively, the projector 41 may temporarily stop the projection, depending on the image information captured by the camera 57. For example, the cooking status determination unit 51a may detect that water is boiling over the container from the image information captured by the camera 57 and may change the projection direction.

### (Third embodiment)

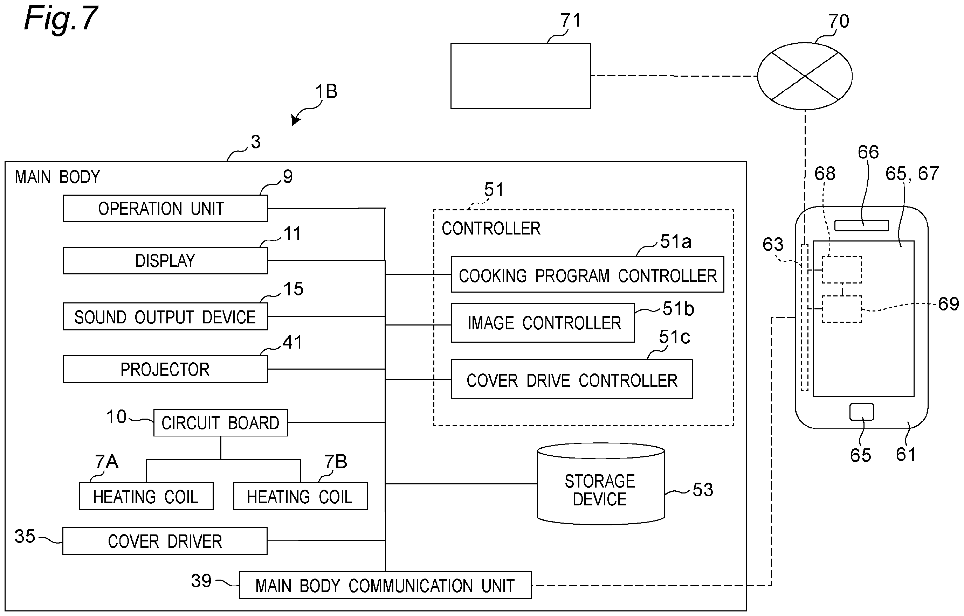

Next, a heating cooker 1B according to a third embodiment will be described with reference to FIG. 7. The heating cooker 1B according to the third embodiment can access a mobile terminal 61 and download a cooking program and an image content via the mobile terminal 61. The heating cooker 1B in the third embodiment has the same configuration as in the heating cooker 1 in the first embodiment, except for the items described below.

The heating cooker 1B in the third embodiment includes a main body communication unit 39, which wirelessly communicates with the mobile terminal 61. Each of the main body communication unit 39 and the terminal communication unit 63 in the mobile terminal 61 has an antenna. The main body communication unit 39 is connected to the terminal communication unit 63 through wireless communication conforming to Wi-Fi (registered trademark), Bluetooth (registered trademark), Bluetooth (registered trademark) Low Energy (BLE), or 5G, for example.

The mobile terminal 61 may be a smartphone or a tablet terminal, for example. The mobile terminal 61 includes: a terminal communication unit 63 that wirelessly communicates with the heating cooker 1B, operation units 65, a sound output device 66, a display 67, a storage device 68, and a terminal controller 69 that controls these components. The terminal communication unit 63 is also connected to a server 71 through wireless communication over an Internet 70 or other network so as to be able to communicate with the server 71.

The sound output device 66 may be a speaker, for example. The display 67 may be a touch panel display, for example, and function as the operation units 65. The terminal controller 69, which is a processing device such as a CPU or a microprocessor, is configured to perform various functions by executing application programs stored in the storage device 68, such as ROM, RAM, a hard disk, and an SSD.

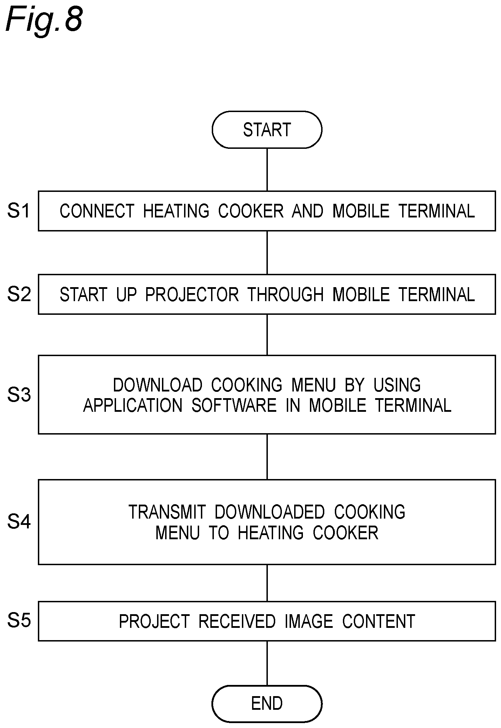

Next, with reference to FIG. 8, a description will be given of a method of projecting an image content of a cooking menu acquired from the server 71. FIG. 8 is a flowchart of processing procedures for projecting an image content of a cooking menu downloaded from a server.

In step S1, the heating cooker 1B and the mobile terminal 61 are wirelessly connected together. The main body communication unit 39 in the heating cooker 1B and the terminal communication unit 63 in the mobile terminal 61 can conduct two-way communication therebetween.

The mobile terminal 61 incorporates application software for the heating cooker 1B in advance by downloading it, for example. A user starts up the application software, thereby being able to operate the heating cooker 1B through the operation units 65 in the mobile terminal 61. In step S2, the user instructs a projector 41 to start up through the operation units 65 in the mobile terminal 61. The operation units 65 output an activation signal to an image controller 51b via the terminal communication unit 63 and the main body communication unit 39. In response to the input activation signal, the image controller 51b starts up the projector 41.

The mobile terminal 61 is connected to the server 71 over the Internet 70. The server 71 stores various cooking menus. In step S3, the user downloads data on a preferred cooking menu from the server 71 to the mobile terminal 61 by using the application software in the mobile terminal 61 and then stores the data in the storage device 68.

In step S4, the mobile terminal 61 transmits the cooking menu data downloaded to the heating cooker 1B. The heating cooker 1B stores the received cooking menu data in a storage device 53.

The user starts guidance of the downloaded cooking menu. In step S5, the image controller 51b transmits image contents related to cooking steps in the cooking menu to the projector 41 and causes the projector 41 to project the image contents onto a wall surface 18.

What is downloaded from the server 71 is not limited to information on a cooking menu. Alternatively, only image contents may be downloaded. The mobile terminal 61 can transmit the downloaded image content to the image controller 51b and causes the projector 41 to project a user's preferred image.

According to the heating cooker 1B in the third embodiment, the heating cooker 1B can download a preferred cooking menu from the server 71 over the Internet 70, thereby successfully projecting an increasing number of image contents. Moreover, the heating cooker 1B can download not only image contents related to a cooking menu but also other preferred image contents, thereby allowing a user to view a preferred image content during cooking.

### (Fourth embodiment)

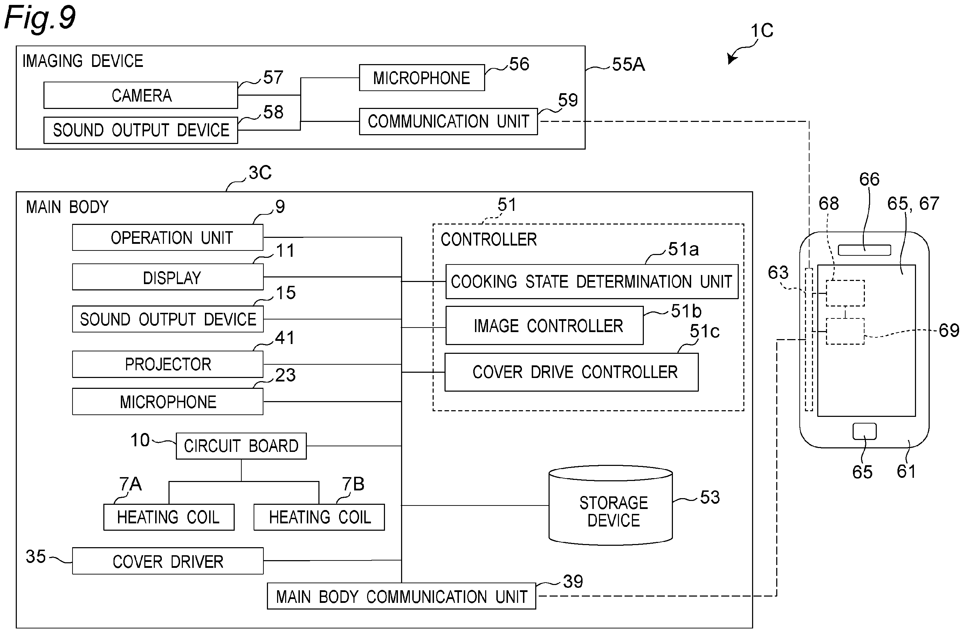

Next, the heating cooker 1C according to a fourth embodiment will be described with reference to FIG. 9. A heating cooker 1C according to the fourth embodiment accesses a mobile terminal 61 and an imaging unit 55A and projects an image captured by a camera 57 onto a wall surface 18. Although the imaging unit 55 in the second embodiment is disposed near the heating cooker 1B such as on the range hood 17, the imaging unit 55A in the fourth embodiment may be disposed in a living or other room. The heating cooker 1C in the fourth embodiment has the same configuration as in the heating cooker 1A in the second embodiment or the heating cooker 1B in the third embodiment, except for the items described below.

The heating cooker 1C includes a microphone 23 that collects cook's voices. The microphone 23 is disposed on a front side of a main body 3C. A main body communication unit 39 transmits sound information collected by the microphone 23 to the imaging unit 55A via, for example, the mobile terminal 61. In this case, each of the heating cooker 1C, the mobile terminal 61, and the imaging unit 55A may be connected to a wireless communication network such as a wireless local-area network (LAN). Then, the heating cooker 1C can directly transmit or receive image and sound information to or from the imaging unit 55A.

The imaging unit 55A includes the camera 57, a microphone 56, a sound output device 58, and a communication unit 59. The communication unit 59 transmits images captured by the camera 57 and sound collected by the microphone 56 to the main body 3C in the heating cooker 1C via the mobile terminal 61.

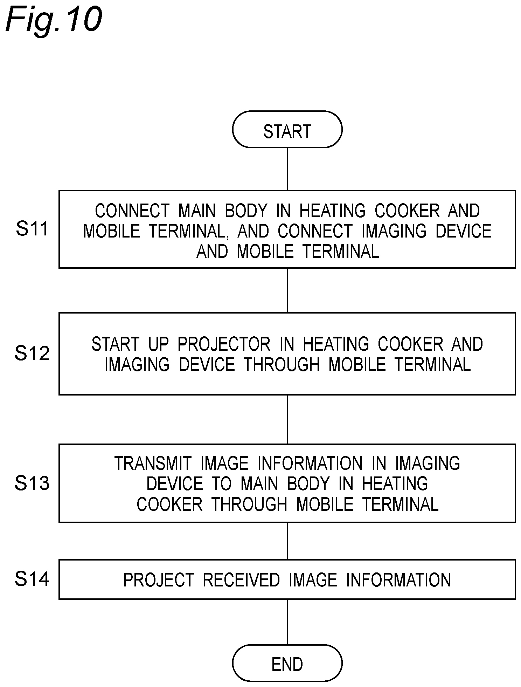

Next, with reference to FIG. 10, a description will be given of a method in which a projector 41 in the heating cooker 1C projects an image captured by the imaging unit 55A. FIG. 10 is a flowchart of processing procedures for projecting an image captured by the imaging unit 55A.

In step S11, the heating cooker 1C and the mobile terminal 61 are wirelessly connected together. The main body communication unit 39 in the heating cooker 1C and a terminal communication unit 63 in the mobile terminal 61 can conduct two-way communication therebetween. In addition, the imaging unit 55A and the mobile terminal 61 are wirelessly connected together. A communication unit 59 in the imaging unit 55A and the terminal communication unit 63 in the mobile terminal 61 can conduct two-way communication therebetween.

The mobile terminal 61 incorporates application software for a main body 3C and the imaging unit 55A in advance by downloading it, for example. A user starts up this application software, thereby being able to operate the main body 3C and the imaging unit 55A through operation units 65 in the mobile terminal 61. In step S12, the user instructs the projector 41 to start up through the operation units 65 of the mobile terminal 61. The operation units 65 in the mobile terminal 61 output an activation signal to an image controller 51b via the terminal communication unit 63 and the main body communication unit 39. In response to the input activation signal, the image controller 51b starts up the projector 41.

The user also instructs the imaging unit 55A to start up through the operation units 65 in the mobile terminal 61. The operation units 65 in the mobile terminal 61 transmit an activation signal to the imaging unit 55A via the terminal communication unit 63 and the communication unit 59, thereby starting up the imaging unit 55A.

In step S13, the imaging unit 55A transmits image information from the camera 57 and sound information from the microphone 56 to a heating cooker 1C via the mobile terminal 61. In this case, the main body 3C, the imaging unit 55A, and the mobile terminal 61 may be simultaneously connected together at multiple points. Then, the main body 3C and the imaging unit 55A may directly transmit/receive the image and sound information to or from each other.

In step S14, the image controller 51b in the heating cooker 1C transmits the received image information to the projector 41. The projector 41 projects the received image information onto the wall surface 18. Furthermore, the image controller 51b in the heating cooker 1C transmits the received sound information to a speaker, which then outputs sound made at the place where the imaging unit 55A is installed.

The heating cooker 1C according to the fourth embodiment enables a user, even when he/she is present in front of the heating cooker 1C, to view images captured at the place where the imaging unit 55A is installed. For example, the heating cooker 1C enables the user to view a state of a child or a person who requires nursing care during cooking by installing the imaging unit 55A in a living room where the child is present or in a bedroom where the person is present.

Two-way voice communication is possible between the heating cooker 1C and the imaging unit 55A. Thus, when a cook speaks, the imaging unit 55A can output his/her voice, thereby making the child or the person who requires nursing care feel relaxed.

### (Fifth embodiment)

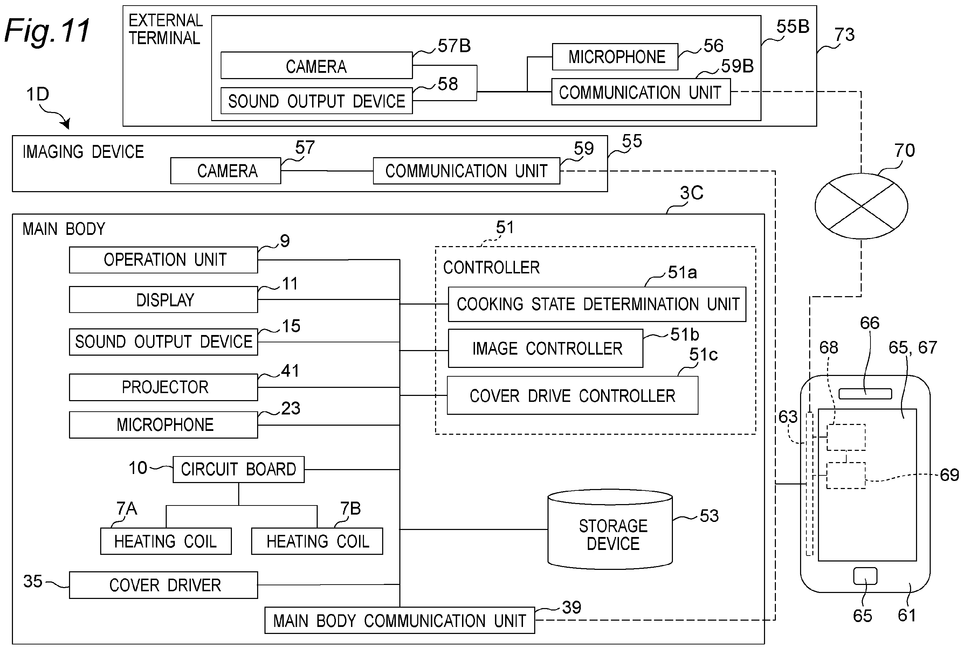

Next, a heating cooker 1D according to a fifth embodiment will be described with reference to FIG. 11. The heating cooker 1D according to the fifth embodiment is the heating cooker 1D that can access an imaging unit 55B in an external terminal 73 via a mobile terminal 61 and over an Internet 70 and can communicate with a person outside through the imaging unit 55B. The heating cooker 1D in the fifth embodiment has the same configuration as the heating cookers 1 to 1C in the first to fourth embodiments, except for the items described below.

The heating cooker 1D includes an imaging unit 55 that captures an image of a cook (user). A camera 57 may be disposed at a center of a hood 17a of a range hood 17 as in the second embodiment or may be disposed on a wall surface 18. For example, the camera 57 is disposed so that the cook, as well as a container and an object to be cooked placed on a top plate 5a are arranged within the angle of view.

The external terminal 73 may be, for example, a personal computer (PC), a mobile tablet, or a mobile terminal. The external terminal 73 is provided with an imaging unit 55B. The imaging unit 55B includes a camera 57B, a microphone 56, a sound output device 58, and a communication unit 59B. For example, the external terminal 73 may be disposed in a cooking classroom or in a house for a family who lives apart. The heating cooker 1D allows a cook to show his/her cooked food to a person outside over the Internet 70 and also to see a food cooked by a person outside.

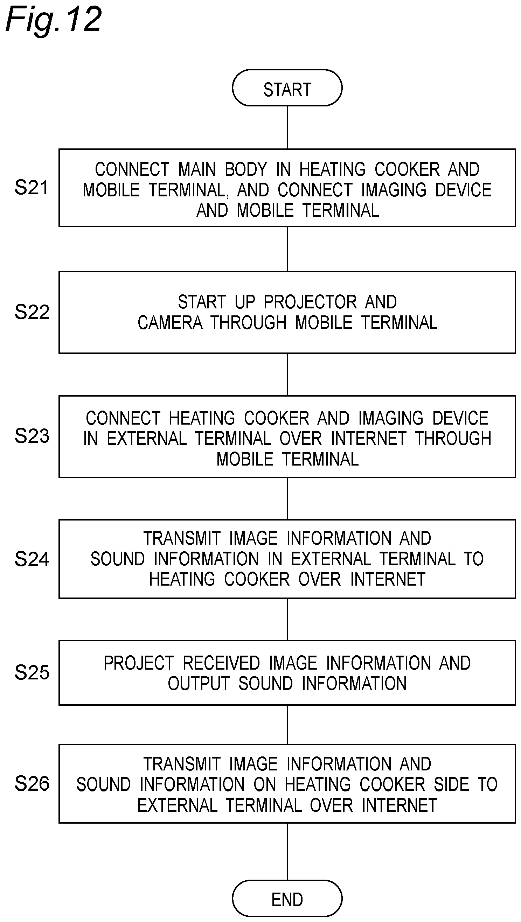

Next, with reference to FIG. 12, a description will be given of a method in which a projector 41 in the heating cooker 1D projects an image captured by the imaging unit 55B. FIG. 12 is a flowchart of image processing procedures in a heating cooker intercommunicating with an external terminal.

In step S21, the heating cooker 1D and the mobile terminal 61 are wirelessly connected together. A main body communication unit 39 in the heating cooker 1D and a terminal communication unit 63 in the mobile terminal 61 can conduct two-way communication therebetween. In addition, the imaging unit 55 and the mobile terminal 61 are wirelessly connected together. Likewise, the imaging unit 55B disposed outside and the mobile terminal 61 are connected together over the Internet 70. The communication unit 59B in the imaging unit 55B and the terminal communication unit 63 in the mobile terminal 61 can conduct two-way communication therebetween.

The mobile terminal 61 incorporates application software for the heating cooker 1D and the imaging unit 55 in advance by downloading it, for example. A user starts up this application software, thereby being able to operate the heating cooker 1D and the camera 57 in the imaging unit 55 through operation units 65 in the mobile terminal 61.

In step S22, the user instructs the projector 41 to start up through the operation units 65 in the mobile terminal 61. The operation units 65 output an activation signal to an image controller 51b via the terminal communication unit 63 and the main body communication unit 39. In response to the input activation signal, the image controller 51b starts up the projector 41.

The user also instructs the camera 57 in the imaging unit 55 to start up through the operation units 65 in the mobile terminal 61. The operation units 65 transmit an activation signal to the camera 57 via the terminal communication unit 63 and the communication unit 59, thereby starting up the camera 57.

In step S23, the mobile terminal 61 connects the heating cooker 1D and the imaging unit 55B in the external terminal 73 over the Internet 70.

In step S24, the external terminal 73 transmits image information captured by the camera 57B and sound information collected by the microphone 56 to the mobile terminal 61 over the Internet 70. The mobile terminal 61 transmits the received image information and sound information to the heating cooker 1D.

In step S25, an image controller 51b in the heating cooker 1D transmits the received image information to the projector 41. The projector 41 projects the received image information onto the wall surface 18. Furthermore, the image controller 51b in the heating cooker 1D transmits the received sound information to a sound output device 15, which then outputs sound made by a person present in front of the external terminal 73. Therefore, even when being preset in front of the heating cooker 1, the cook can view cooking procedures demonstrated by a teacher of the cooking class through images, thereby learning the recipe.

In addition, since the heating cooker 1D transmits/receives images and sound to or from the imaging unit 55B, the user can show his/her cooked food to the teacher of the cooking class. In addition, the cook can have a conversation with the teacher of the cooking class.

The image controller 51b may combine image information received from the external terminal 73 and an image of the cook and an object to be heated captured by the imaging unit 55 in the heating cooker 1D and may cause the projector 41 to project a combined image such as a wipe image.

The heating cooker 1D in the fifth embodiment is connected to the external terminal 73 over the Internet 70 and thus allows a user to view a person present in front of the external terminal 73 and a cooking scenery and also to have a conversation. Moreover, the heating cooker 1D can also show the user present in front of the heating cooker 1D and a cooking status on the top plate 5a to a person present in front of the external terminal 73.

The present disclosure is not limited to the above embodiments and can be modified in the following manner.

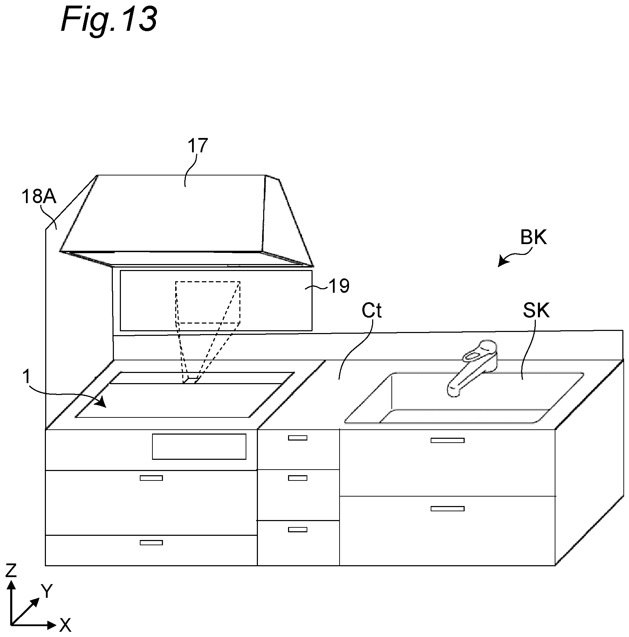

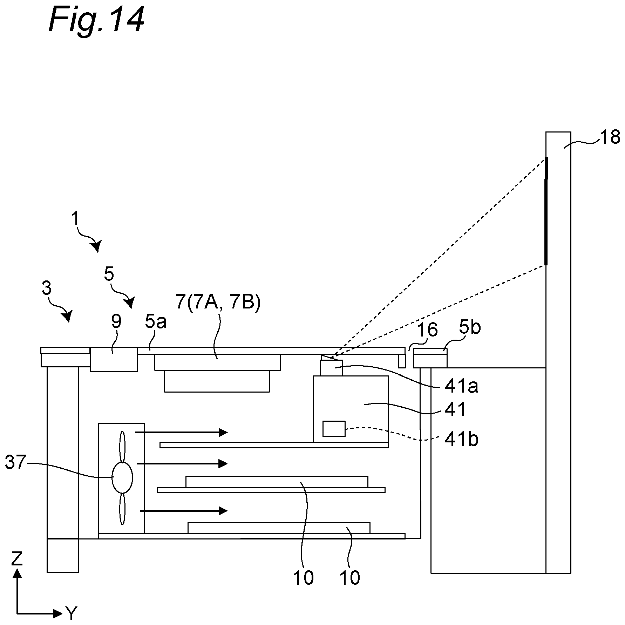

(1) In the above embodiments, an image content is projected onto a wall, but the present disclosure is not limited to this configuration. As illustrated in FIG. 13, for example, if a window or space is present between a range hood 17 and a heating cooker 1 instead of a wall surface 18, a screen 19 may be provided. For example, the screen 19 may be a roll screen made of cloth or a disposable screen that is replaceable when it becomes dirty with oil. If it is difficult to view an image because of a color of a wall surface, a white screen may be bonded to the wall surface. Of the screen 19 of a bonded type, for example, one surface is a light diffusing layer, and the other surface is an adhesive layer. The screen 19 includes at least a light reflecting layer between the light diffusing layer and the adhesive layer.
(2) In the above embodiments, a projector 41 makes an image reflect on a cover 33, projecting the image; however, the present disclosure is not limited to this configuration. Instead of making an image reflect on the cover 33, the projector 41 may project the image directly. As illustrated in FIG. 14, the projector 41 may pass an image through a back frame 5b or a top plate 5a in a top unit 5, projecting the image directly. The back frame 5b or top plate 5a through which an image content passes is a colorless, transparent member, such as a tempered glass. In this case, the projector 41 itself may be rotatable so as to rotate a projection direction. Alternatively, a cover glass different from the top plate 5a may be attached to the back frame 5b or the top plate 5a. Then, this cover glass may transmit light, projecting an image. Furthermore, a part of the projector 41, such as a projection lens 41a, may protrude from the back frame 5b or the top plate 5a. Then, this protruding part may project light directly onto a wall surface 18. The protruding part may be rotatable about a vertical axis or may be movable upward and downward in the vertical direction. The protruding part may be covered with a dome-shaped or tubular cover. The dome-shaped or tubular cover may be configured so that its portion or whole transmits light.
(3) In the above embodiments, image contents stored in a storage device 53 are not limited to those related to cooking. Image contents may be other contents, such as a landscape or outdoor images. Furthermore, a user may be able to directly select image contents through an operation unit 9. Images also include still images and moving images.
(4) In the above embodiments, a heating cooker 1 is an induction heating cooker that induces and heats a container by using heating coils 7A and 7B; however, the present disclosure is not limited to this configuration. For example, the heating cooker 1 may be a gas cooker. If a gas cooker is used, a container is placed on a trivet, which acts as a container mounting part, provided on a top plate 5a of a main body 3. Then, the container is heated from below by a gas burner, which acts as a heater.
(5) In the above embodiments, the number of projectors 41 is one; however, a plurality of projectors 41 may be used. Furthermore, a plurality of light guide paths may be provided for one projector 41. In this case, if a projection direction of an image is largely changed, it may be difficult to subject a projected image to keystone correction. Therefore, from the plurality of light guide paths, a light guide path corresponding to a wanted projection direction is selected. It is thereby possible to reduce a change in a projection direction for each light guide path and to project an image with less distortion.
(6) In the above embodiments, a projector 41 may employ a cathode-ray tube (CRT) or liquid crystal type, or may be a head-up display.

Of the above various embodiments and modifications, any embodiments may be combined together as appropriate to produce effects of the individual embodiments.

Although the present disclosure has been fully described in relation to preferred embodiments with reference to the accompanying drawings, various modifications and amendments can be obvious to those skilled in the art. It should be understood that such modifications and amendments fall within the scope of the present disclosure defined by the appended claims. In addition, it is possible to achieve changes in the combination and order of elements in the individual embodiments without departing from the scope and ideas of the present disclosure.

### DESCRIPTION OF SYMBOLS

- 1, 1A, 1B, 1C, 1D: heating cooker
- 3: main body
- 4: notification unit
- 5: top unit
- 5a: top plate
- 5b: back frame
- 7: heater
- 7A, 7B: heating coil
- 9: operation unit
- 10: circuit board
- 11: display
- 15: sound output device
- 16: exhaust port
- 17: range hood
- 18, 18A: wall surface
- 19: screen
- 23: microphone
- 25: main body communication unit
- 27, 28: human detection sensor
- 29: temperature sensor
- 31: through-hole
- 33: cover
- 33a: inner surface
- 35: cover driver
- 37: fan
- 39: main body communication unit
- 41: projector
- 41a: projection lens
- 41b: light source
- 43: camera
- 51: controller
- 51a: cooking status determination unit
- 51b: image controller
- 51c: cover drive controller
- 51d: sound recognition unit
- 53: storage device
- 55: imaging unit
- 56: microphone
- 57: camera
- 58: sound output device
- 59: communication unit
- 61: mobile terminal
- 63: terminal communication unit
- 65: operation unit
- 67: display
- 69: terminal controller
- 70: Internet
- 71: server
- 73: external terminal

## Claims

1. A heating cooker comprising:
a top plate on which a container that accommodates an object to be heated is placed;
a heater that heats the container placed on the top plate from below; and
a projector that is at least partly disposed below the top plate and that projects an image diagonally upward.

2. The heating cooker according to claim 1, wherein the projector has a zoom lens.

3. The heating cooker according to claim 1 or 2, wherein
the top plate has an opening, and
the heating cooker further comprises a cover that covers the opening in an openable and closable manner.

4. The heating cooker according to claim 1 or 2, further comprising a projection direction changing unit capable of moving an image projected from the projector in a horizontal direction.

5. The heating cooker according to claim 4, wherein
the top plate has an opening,
the projection direction changing unit includes a cover that covers the opening in an openable and closable manner and that has a reflective surface and a cover driver that drives and rotates the cover biaxially, and
the projector makes the image reflect on the reflective surface of the cover to project the image.

6. The heating cooker according to claim 4 or 5, wherein the projection direction changing unit changes a projection direction of the image in accordance with a cooking status.

7. The heating cooker according to claim 6, further comprising:
a temperature sensor that detects a temperature of the container; and
a cooking status determination unit that determines the cooking status, based on the temperature detected by the temperature sensor, wherein
the projection direction changing unit changes the projection direction of the image, based on a determination result of the cooking status determination unit.

8. The heating cooker according to claim 4 or 5 further comprising a human detection sensor that detects presence of a user,
wherein the projection direction changing unit changes the projection direction of the image, depending on a user position.

9. The heating cooker according to claim 4 or 5, wherein the projection direction changing unit changes the projection direction of the image, depending on a kind of an image content.

10. The heating cooker according to claim 4 or 5, further comprising an instruction receiver that receives a user's instruction,
wherein the projection direction changing unit changes a projection direction, based on the user's instruction.

11. The heating cooker according to one of claims 1 to 5, further comprising an image controller that controls selection and playback of an image content to be projected,
wherein the image controller changes display of the image content, in accordance with the cooking status.

12. The heating cooker according to one of claims 1 to 11, further comprising a main body communication unit wirelessly connected to a mobile terminal,
wherein
the main body communication unit receives an image captured by a camera to which the mobile terminal is wirelessly connected, and
the projector projects the captured image.

13. The heating cooker according to one of claims 1 to 11, further comprising a main body communication unit wirelessly connected to a mobile terminal,
wherein
the main body communication unit receives an image captured by a camera that an external terminal connected to the mobile terminal over the Internet has, and
the projector projects the captured image.

14. The heating cooker according to one of claims 1 to 13, further comprising a screen on which an image emitted from the projector is projected.
